# EUROPEAN PATENT APPLICATION

(11) **EP 4 675 587 A1**
(43) Date of publication of application: **07.01.2026**
(21) Application number: 25186431.0
(22) Date of filing: 30.06.2025
(51) Int. Cl.: G08B 21/18, G08B 23/00

(54) **METHOD FOR VEHICLE CONDITION ALERT AND COMMUNICATION**

(30) Priority: 01.07.2024 ZA 202405130
(71) Applicant: Naidoo, Shaldon, Steyn City, Johannesburg (ZA)
(72) Inventor: Naidoo, Shaldon, Steyn City, Johannesburg (ZA)
(74) Representative: Marks & Clerk LLP

(57) **Abstract**

The present disclosure provides a computer-implemented method for vehicle condition alerting. The method includes collecting, by means of at least one processor, from a first end user device, vehicle identification data comprising at least a vehicle license plate number or an image containing the license plate; processing the vehicle identification data to determine the license plate number; comparing the determined license plate number with pre-stored data of registered vehicles associated with user profiles; and when a match is found, enabling the first end user device to transmit an alert message to a user profile associated with the matched vehicle, wherein the delivery of the message being effected via a communication channel that does not expose personal contact details of the user associated with the first end device and user associated with the matched vehicle. The method enables users to report vehicle conditions or communicate with vehicle owners through a secure system without revealing personal information.

## Description

### FIELD OF INVENTION

The invention is in the field of computer-implemented methods and systems for alerting vehicle owners about vehicle conditions and facilitating communication between vehicle users or observers.

### BACKGROUND OF INVENTION

Motorists, pedestrians and other road users frequently observe circumstances in which it would be desirable to contact the owner or driver of another vehicle, for example to warn the owner that a tyre is deflated, that the headlights have been left on, that a window is open, or that the vehicle is unlocked.

Current methods for reporting vehicle issues may require contacting law enforcement or leaving physical notes on a vehicle, which can be time-consuming and may not reach the vehicle owner in a timely manner. There is a lack of streamlined, digital solutions for this type of communication.

There is therefore a need for a technical solution that allows strangers/observers to anonymously alert a vehicle owner to an urgent or actionable condition quickly, accurately and securely, without exposing either party's personal contact details.

### SUMMARY OF INVENTION

According to a first aspect of the invention, there is provided a computer-implemented method for facilitating communication regarding a condition of a vehicle, the method comprising:
collecting, by means of at least one processor, from a first end user device, vehicle identification data comprising at least a vehicle license plate number or an image containing the license plate;
processing the vehicle identification data to determine the license plate number;
comparing the determined license plate number with pre-stored data of registered vehicles associated with user profiles; and
when a match is found, enabling the first end user device to transmit an alert message to a user profile associated with the matched vehicle, wherein the delivery of the message being effected via a communication channel that does not expose personal contact details of the user associated with the matched vehicle.

The method may comprise, upon delivery of the alert message, automatically generating a notification to the intended recipient (i.e., user profile associated with the matched vehicle), ensuring prompt awareness of the condition of the vehicle.

The method may further comprise allowing the user associated with the matched vehicle to communicate with a user/observer associated with the first end user device or vice versa through the communication channel, allowing for follow-up discussion or clarification while continuing to prevent the disclosure of personal contact information.

The alert message may be a structured alert message or a customized alert message.

The method may be arranged to simultaneously deliver the alert message to multiple user profiles associated with a single vehicle, such as co-owners or authorised drivers, thereby ensuring that all relevant parties associated with the matched vehicle are informed of actionable vehicle conditions in a timely and secure manner.

The input received from the first end user device, associated with the observer, may be a manual input of the vehicle license plate number. The manual input may allow the observer to easily report vehicle information without requiring specialized equipment or image capturing capabilities.

The input may be a captured image of the license plate number or may be an image of the vehicle which includes the license plate number, and the method may be arranged to collect the details of the license plate number from the captured image using, for example, optical recognition or other image processing means.

Using image capture and processing of the image may enable quick and accurate collection of vehicle license plate information, reducing errors that may occur with manual input.

The prestored data may include a list of license plate numbers of different vehicles which are associated with user profiles of the vehicle owners or drivers or authorized users thereof.

The database of license plates and associated owners, drivers or authorized users of the vehicles may allow for efficient matching and message routing while protecting the privacy of the owner or drivers or authorized users of the vehicles.

The pre-stored data may also include a user profile of the person associated with the matched vehicle or a driver or authorized user of the matched vehicle, so that the message is automatically transmitted to a user's digital mailbox of the person associated with the vehicle.

The prestored data may therefore contain a plurality of user profiles of persons/drivers/authorized users of vehicles the license plate numbers for which are preregistered on the database.

The user profiles may enable direct and private communication to the appropriate vehicle owner or driver or authorized user of the vehicle.

In accordance with a second aspect of the invention, there is provided a vehicle condition alert system for facilitating communication regarding vehicle conditions, the vehicle condition alert system includes:
at least one processor; and
at least one memory device coupled to the at least one processor, the at least one memory device including instructions which, when executed by the processor are arranged to:
   collect, from a first end user device, vehicle identification data comprising at least a vehicle license plate number or an image containing the license plate;
   process the vehicle identification data to determine the license plate number;
   compare the determined license plate number with pre-stored data, in a database or in the memory device, of registered vehicles associated with user profiles; and
   when a match is found, enable the first end user device to transmit an alert message to a user profile associated with the matched vehicle, wherein the delivery of the message being effected via a communication channel that does not expose personal contact details of the user associated with the matched vehicle.

In the context of the invention, the term *"communication channel"* refers to an in-application messaging interface, system-mediated messaging service, or secure, systemcontrolled message relay by which messages are delivered to a user's digital message inbox, notification area or private digital mailbox associated with a recipient's user profile within the system. The channel is confined to the system's internal messaging infrastructure and excludes direct external communication such as SMS or e-mail.

The alert message may be a structured alert message or may be a customized message which may be compiled by a user associated with the first end user device.

The term *"structured alert message"* refers to a message comprising a selectable category or predefined type of vehicle condition chosen from a set of actionable options (including, by way of example only: flat tyre, lights left on, windows open, vehicle unlocked, or any other actionable vehicle condition).

The system may provide a hardware and software implementation to enable the efficient and privacy-preserving communication described above.

The input received from the first end user device may be a manual input of the vehicle license plate number.

The input may be a captured image of the license plate number, and the system may be arranged to collect the details of the license plate number from the captured image and process same using optical recognition or other image processing means.

In accordance with a third aspect of the invention, there is provided a computer-readable medium storing instructions thereon, the instructions, when executed by at least one processor, are arranged to cause the at least one processor to perform the operations of:
collecting, by means of at least one processor, from a first end user device, vehicle identification data comprising at least a vehicle license plate number or an image containing the license plate;
processing the vehicle identification data to determine the license plate number;
comparing the determined license plate number with pre-stored data of registered vehicles associated with user profiles; and
when a match is found, enabling the first end user device to transmit an alert message to a user profile associated with the matched vehicle, wherein the delivery of the message being effected via a communication channel that does not expose personal contact details of the user associated with the first end device and user associated with the matched vehicle.

### BRIEF DESCRIPTION OF FIGURES

The objects of this invention and the manner of obtaining them, will become more apparent, and the invention itself will be better understood, by reference to the following description of embodiments of the invention taken in conjunction with the accompanying diagrammatic drawings, wherein:
**Figure 1** shows a high-level network in accordance with an embodiment of the present invention;
**Figure 2** shows a high-level computer-implemented method in accordance with the invention; and
**Figure 3** shows a diagrammatic representation of a machine in the example form of a computer system in which a set of instructions for causing the machine to perform any one or more of the methodologies discussed herein, may be executed.

### DETAILED DESCRIPTION OF AN EXAMPLE EMBODIMENT

The following description of the invention is provided as an enabling teaching of the invention. Those skilled in the relevant art will recognise that many changes can be made to the embodiment described, while still attaining the beneficial results of the present invention. It will also be apparent that some of the desired benefits of the present invention can be attained by selecting some of the features of the present invention without utilising other features. Accordingly, those skilled in the art will recognise that modifications and adaptations to the present invention are possible and can even be desirable in certain circumstances, and are a part of the present invention. Thus, the following description is provided as illustrative of the principles of the present invention and not a limitation thereof.

It will be appreciated that the phrase "for example," "such as", and variants thereof describe non-limiting embodiments of the presently disclosed subject matter. Reference in the specification to "one example embodiment", "another example embodiment", "some example embodiment", or variants thereof means that a particular feature, structure or characteristic described in connection with the embodiment(s) is included in at least one embodiment of the presently disclosed subject matter. Thus, the use of the phrase "one example embodiment", "another example embodiment", "some example embodiment", or variants thereof does not necessarily refer to the same embodiment(s).

Unless otherwise stated, some features of the subject matter described herein, which are, described in the context of separate embodiments for purposes of clarity, may also be provided in combination in a single embodiment. Similarly, various features of the subject matter disclosed herein which are described in the context of a single embodiment may also be provided separately or in any suitable sub-combination.

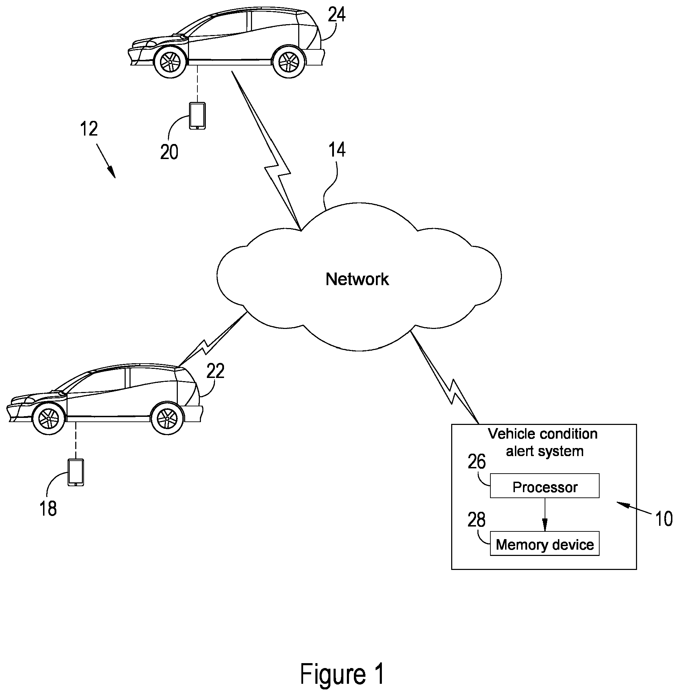

As shown in Figure 1, there is provided a vehicle condition alert system 10 in a network system 12 that enables communication between users regarding vehicle conditions. The vehicle condition alert system 10 generally acts as a central hub for processing and routing communications related to vehicle conditions. The communication network 14 facilitates data exchange between the vehicle condition alert system 10 and connected user devices. Through this network arrangement provided by the network system 12, users can send and receive alerts about vehicle conditions using their respective devices.

The communications network 14 may comprise one or more different types of communication networks. In this regard, the communication networks may be one or more of the Internet, a local area network (LAN), a wide area network (WAN), a metropolitan area network (MAN), various types of telephone networks (e.g., Public Switch Telephone Networks (PSTN) with Digital Subscriber Line (DSL) technology) or mobile networks (e.g., Global System Mobile (GSM) communication, General Packet Radio Service (GPRS), Code Division Multiple Access (CDMA), and other suitable mobile telecommunication network technologies), or any combination thereof. It will be noted that communication within the network may achieved via suitable wireless or hard-wired communication technologies and/or standards (e.g., wireless fidelity (Wi-Fi^{®}), 4G, longterm evolution (LTE^{™}), WiMAX, 5G, and the like). In some example embodiments, the vehicle condition alert system 10 may be coupled to other elements of the communications network 14 via dedicated communication channels, for example, secure communication networks in the form of encrypted communication lines (e.g. SSL (Secure Socket Layer) encryption).

The network system 12 follows a distributed topology with the vehicle condition alert system 10 serving as a central point for handling vehicle condition data and alerts. The vehicle condition alert system 10 contains components for processing and storing information transmitted through the network system 12.

The network system 12 includes a first end user device 18 associated with a first vehicle 22 or an observer who may not be associated with a vehicle, and a second end user device 20 associated with a person associated with a second vehicle 24, as shown in Figure 1. The first end user device 18 and the second end user device 20 are configured to communicate with the vehicle condition alert system 10 through the communication network 14 via a system-mediated communication channel (i.e., the vehicle condition alert system 10 handles the delivery and receipt of messages between users, and typically ensures that personal contact details (such as phone numbers or email addresses) are not disclosed to either party).

The first end user device 18 and the second end user device 20 may be any suitable computing devices capable of connecting to the communication network 14, such as smartphones, tablets, laptops, or dedicated in-vehicle systems. These devices enable users to interact with the vehicle condition alert system 10 and report or receive information about vehicle conditions.

The vehicle condition alert system 10 comprises a processor 26 and a memory device 28, as shown in Figure 1.

The processor 26 may be one or more processors in the form of programmable processors executing one or more computer programs to perform actions by operating on input data and generating an output. The processor 26, as well as any computing device referred to herein, may be any kind of electronic device with data processing capabilities including, by way of non-limiting example, a general processor, a graphics processing unit (GPU), a digital signal processor (DSP), a microcontroller, a field programmable gate array (FPGA), an application specific integrated circuit (ASIC), or any other electronic computing device comprising one or more processors of any kind, or any combination thereof. For brevity, steps described as being performed by the vehicle condition alert system 10 may be steps which are effectively performed by the processor 26 and vice versa unless otherwise indicated.

It will be appreciated that the software instructions or computer programs executable by the processor 26 may be written in any form of programming language, including compiled or interpreted languages, declarative or procedural languages, and can be deployed in any form, including as a stand-alone program or as a module, component, subroutine, object, or other unit suitable for use in a computing environment. The computer program may, but need not, correspond to a file in a file system. The program can be stored in a portion of a file that holds other programs or data (e.g., one or more scripts stored in a mark-up language document), in a single file dedicated to the program in question, or in multiple coordinated files (e.g., files that store one or more modules, sub-programs, or portions of code). The computer program can be deployed to be executed by one processor 26 or by multiple processors, even those distributed across multiple locations, for example, in different servers and interconnected by the communication network 14.

The processor 26 is configured to execute instructions and perform operations related to vehicle condition alerts. The processor 26 may process inputs received from the first user end device 18 and the second user end device 20 through the communication network 14. These inputs may include vehicle details such as license plate numbers or images of license plates and messages intended to be exchanged between the first and second end user devices 18, 20.

The processor 26 is arranged to compare the received vehicle details against prestored data to identify matches. When a match is found, the processor 26 is arranged to generate and transmit appropriate alert messages which may be in the form of structured messages or a user customized messages to a user profile of a person associated with the matched vehicle.

The memory device 28 is coupled to the processor 26 and stores data used by the vehicle condition alert system 10. The memory device 28 may contain pre-stored data including a list of license plate numbers associated with different vehicles. The prestored data also includes information such as vehicle registration details and user profiles to enable matching of reported vehicle conditions to the appropriate recipients. Alternatively, the pre-stored data may be contained in a database (not shown) of the vehicle condition alert system 10 or a database (not shown) that is in communication with the vehicle condition alert system 10.

It will be appreciated that the memory device 28 may be in the form of computer-readable medium including system memory and including random access memory (RAM) devices, cache memories, non-volatile or back-up memories such as programmable or flash memories, read-only memories (ROM), etc. In addition, the memory device 28 may be considered to include memory storage physically located elsewhere in the vehicle condition system 10, e.g. any cache memory in the processor 26 as well as any storage capacity used as a virtual memory, e.g., as stored on a mass storage device.

As mentioned above, the memory device 28 or database (not shown) may store user profiles for individuals associated with registered vehicles. Each user profile may include contact information such as a user's mailbox identifier to allow messages to be delivered via a communication channel of the vehicle condition system 10 to a user's mailbox associated with the recipient's profile.

In use, when the processor 26 determines that an alert message should be sent, the processor 26 is arranged to access the relevant user profile from the memory device 28 or database (not shown) to obtain the appropriate contact information and then deliver the alert message to the user's mailbox which is associated with the recipient's profile.

In use, a user of the first end user device 18 launches the vehicle condition alert system 10 through an application (i.e., front end) thereof which is incorporated in the first end user device 18 and provides an input, into the application, containing details of the second vehicle 24. The input may be a manual input of the second vehicle's 24 license plate number. Alternatively, the input may be a captured image of the license plate number of the second vehicle 24. In one example, the user of the first end user device 18 may capture an image of the second vehicle 24 containing the license plate number via the application and transmit the image to a back end/server of the vehicle condition alert system 10. In another example, the user of the first end user device 18 may capture the image of the vehicle containing the license plate number and upload it to the application and the application may be configured to transmit the captured image to the back end/server of the vehicle condition alert system 10. The vehicle condition alert system 10 is configured to receive the captured image and collect the details of the license plate number from the captured image using optical recognition or other image processing techniques. Thereafter, the vehicle condition alert system 10 compares the vehicle details to pre-stored data of registered vehicles associated with user profiles. If a match is found, the vehicle condition alert system 10 is arranged to transmit a message to the first end user device 18 to indicate that the user of the first end user device 18 may send an alert message, through the communication channel, to the user associated with the matched vehicle.

In one example, the user of the first end user device 18 may then prepare and send a customized message to the vehicle condition alert system 10. After receiving the customized message, the vehicle condition alert system 10 is arranged to send the customized message to a user's mailbox associated with a user profile of the person associated with the matched vehicle.

In another example, the user associated with the first end user device 18 may be prompted to select a structured, predefined message from a list of selectable structured messages. The list of structured messages may include system written messages (or system generated messages) from which the user of the first end user device 18 may select. The system written messages include, for example, separate/dedicated messages arranged to report a specific condition of the vehicle, for example the structured messages may include a message indicating the tyre of a vehicle is flat, a message indicating headlights of the vehicle are on, a message indicating that the vehicle is unlocked, and other messages indicating other appropriate vehicle conditions. The user of the first end user device 18 may then select the appropriate message and same will be automatically delivered to the mailbox associated with the user profile of the matched vehicle.

It will be appreciated that, at the time the manual input or captured image of the vehicle is transmitted to the vehicle condition alert system 10, this may be accompanied by the customized message or one of the system written/generated structured messages which the user may have selected after or before providing the captured image.

The user associated with the matched vehicle receives communications on the second end user device 20 via the application through the communication network 14 and via the communication channel of the vehicle condition alert system 10.

Once the user of the first end user device 18 has transmitted the alert message and same has been delivered to the mailbox associated with a user profile of the person/user associated with the matched vehicle, the vehicle condition alert system 10 may allow the user associated with the first end user device 18 and the user associated with the second end user device 20 to communicate via their respective user profiles through the communication channel provided by the system 10.

It will be appreciated from the description provided above that, the first vehicle 22 associated with the user associated with the first end user device 18 and the second vehicle 24 the condition of which is desired to be reported, are not directly connected to the communication network 14. Instead, the vehicle condition alert system 10 relies on the associated end user devices 18, 20 to provide and receive information about the vehicles. This arrangement allows the vehicle condition alert system 10 to function without requiring direct connectivity or specialized hardware in the vehicles themselves.

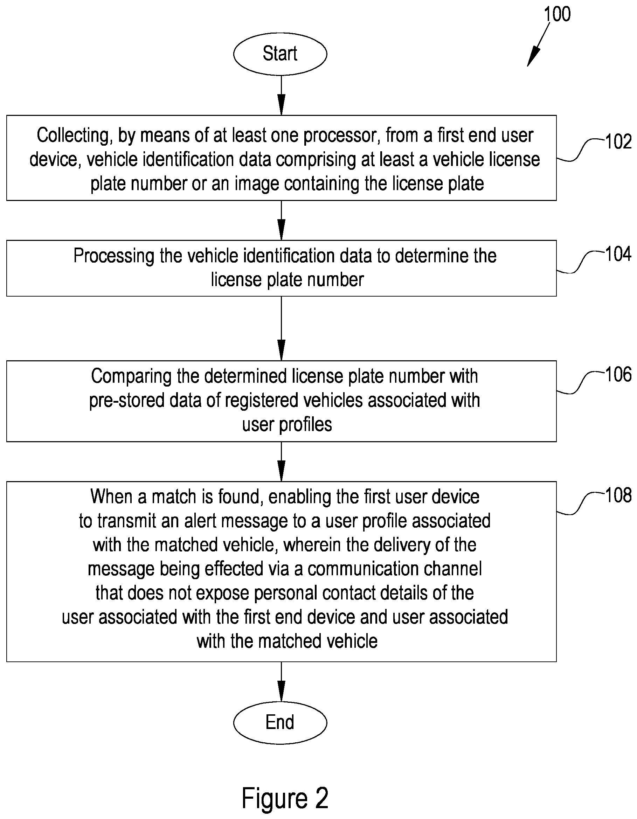

Referring now to Figure 2 of the drawings where a high-level flow diagram of a method in accordance with an example embodiment of the invention is generally indicated by reference numeral 100. It will be appreciated that the example method 100 may be implemented by systems and means not described herein. However, by way of a non-limiting example, reference will be made to the method 100 as being implemented by way of the vehicle condition alert system 10, as described above. Accordingly, the method 100 comprises the steps of:
102 - collecting, by means of at least one processor, from a first end user device, vehicle identification data comprising at least a vehicle license plate number or an image containing the license plate;
104 - processing the vehicle identification data to determine the license plate number;
106 - comparing the determined license plate number with pre-stored data of registered vehicles associated with user profiles; and
108 - when a match is found, enabling the first end user device to transmit an alert message to a user profile associated with the matched vehicle, wherein the delivery of the message being effected via a communication channel that does not expose personal contact details of the user associated with the first end device and user associated with the matched vehicle.

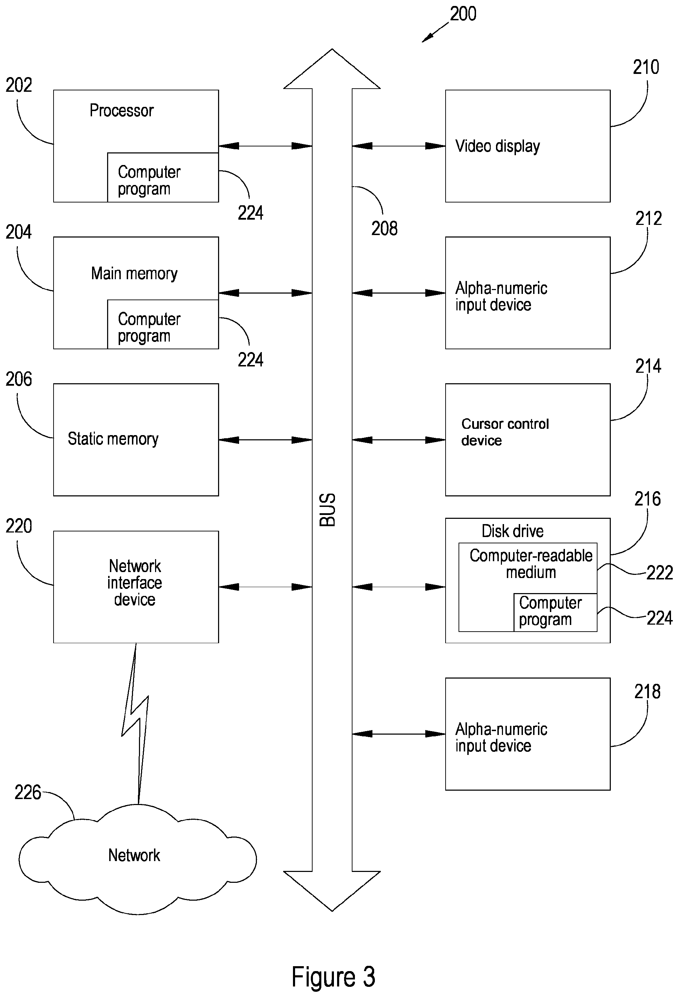

Referring now to Figure 3 of the drawings which shows a diagrammatic representation of a machine in the example of a computer system 200 within which a set of instructions, for causing the machine to perform any one or more of the methodologies discussed herein, may be executed. In other example embodiments, the machine operates as a standalone device or may be connected (e.g., networked) to other machines. In a networked example embodiment, the machine may operate in the capacity of a server or a client machine in server-client network environment, or as a peer machine in a peer-to-peer (or distributed) network environment. The machine may be a personal computer (PC), a tablet PC, a set-top box (STB), a Personal Digital Assistant (PDA), a cellular telephone, a web appliance, a network router, switch or ridge, or any machine capable of executing a set of instructions (sequential or otherwise) that specify actions to be taken by that machine. Further, while only a single machine is illustrated for convenience, the term "machine" shall also be taken to include any collection of machines, including virtual machines, that individually or jointly execute a set (or multiple sets) of instructions to perform any one or more of the methodologies discussed herein.

In any event, the example computer system 200 includes a processor 202 (e.g., a central processing unit (CPU), a graphics processing unit (GPU) or both), a main memory 204 and a static memory 206, which communicate with each other via a bus 208. The computer system 200 may further include a video display unit 210 (e.g., a liquid crystal display (LCD) or a cathode ray tube (CRT)). The computer system 200 also includes an alphanumeric input device 212 (e.g., a keyboard), a user interface (UI) navigation device 214 (e.g., a mouse, or touchpad), a disk drive unit 216, a signal generation device 218 (e.g., a speaker) and a network interface device 220.

The disk drive unit 216 includes a non-transitory machine-readable medium 222 storing one or more sets of instructions and data structures (e.g., software 224) embodying or utilized by any one or more of the methodologies or functions described herein. The software 224 may also reside, completely or at least partially, within the main memory 204 and/or within the processor 202 during execution thereof by the computer system 200, the main memory 204 and the processor 202 also constituting machine-readable media. The software 224 may further be transmitted or received over a network 226 via the network interface device 220 utilizing any one of a number of well-known transfer protocols (e.g., HTTP). Although the machine-readable medium 222 is shown in an example embodiment to be a single medium, the term "machine-readable medium" may refer to a single medium or multiple medium (e.g., a centralized or distributed memory store, and/or associated caches and servers) that store the one or more sets of instructions. The term "machine-readable medium" may also be taken to include any medium that is capable of storing, encoding or carrying a set of instructions for execution by the machine and that cause the machine to perform any one or more of the methodologies of the present invention, or that is capable of storing, encoding or carrying data structures utilized by or associated with such a set of instructions. The term "machine-readable medium" may accordingly be taken to include, but not be limited to, solid-state memories, optical and magnetic media, and carrier wave signals.

While the invention has been described in detail with respect to a specific embodiment and/or example thereof, it will be appreciated that those skilled in the art, upon attaining an understanding of the foregoing may readily conceive of alterations to, variations of and equivalents to these embodiments.

## Claims

1. A computer-implemented method for vehicle condition alerting, the method comprising:
collecting, by means of at least one processor, from a first end user device, vehicle identification data comprising at least a vehicle license plate number or an image containing the license plate;
processing the vehicle identification data to determine the license plate number;
comparing the determined license plate number with pre-stored data of registered vehicles associated with user profiles; and
when a match is found, enabling the first end user device to transmit an alert message to a user profile associated with the matched vehicle, wherein the delivery of the message being effected via a communication channel that does not expose personal contact details of the user associated with the matched vehicle.

2. The method of claim 1, wherein the input is a manual input of the license plate number.

3. The method of claim 1, wherein the input is a captured image of the license plate number.

4. The method of claim 3, further comprising collecting the license plate number from the captured image using optical character recognition.

5. The method of any one of the preceding claims, wherein the pre-stored data includes a list of license plate numbers associated with user profiles of respective owners or drivers or authorized users of the registered vehicles.

6. The method of claim 5, wherein the alert message is transmitted to a user's mailbox associated with a profile of the person associated with the matched vehicle.

7. The method of any one of the preceding claims, wherein the alert message is delivered by the communication channel via an in-application messaging interface, or a system-mediated messaging service.

8. The method of any one of the preceding claims, wherein the alert message is selected from a customized message and a structured message including information about the condition of the vehicle.

9. A computer-readable medium comprising instructions which, when executed by a computer, cause the computer to carry out the method of any one of claims 1 to 8.

10. A vehicle alert system comprising a processor and a memory device, wherein the memory device comprises instructions stored thereon which, when executed by the processor, causes the vehicle alert system to perform the method of any one of claims 1 to 8.
